# EUROPEAN PATENT APPLICATION

(11) **EP 4 592 736 A1**
(43) Date of publication of application: **30.07.2025**
(21) Application number: 23881272.1
(22) Date of filing: 26.06.2023
(51) Int. Cl.: G02B 27/01

(54) **VIRTUAL IMAGE DISPLAY DEVICE AND VEHICLE**

(30) Priority: 27.10.2022 CN 202211329435
(71) Applicant: Shenzhen Yinwang Intelligent Technologies Co., Ltd., Shenzhen, Guangdong 518129 (CN)
(72) Inventor: XU, Liguo, Shenzhen, Guangdong 518129 (CN); HUANG, Zhiyang, Shenzhen, Guangdong 518129 (CN); MAO, Lei, Shenzhen, Guangdong 518129 (CN)
(74) Representative: Pfenning, Meinig & Partner mbB
(86) International application number: PCT/CN2023/102372
(87) International publication number: WO 2024/087683

(57) **Abstract**

Embodiments of this application disclose a virtual image display device and a vehicle, to reduce a volume of the display device and enable a housing of the display device to adapt to an ambient environment. The virtual image display device provided in embodiments of this application includes a first housing (2100), a second housing (2200), a folding mechanism (2300) connecting the first housing (2100) to the second housing (2200), and a display system (2400). The display system (2400) includes an image source (2410), a transmissive-reflective unit (2420), and a reflective unit (2430). The image source (2410) and the reflective unit (2430) are connected to an inner wall of the first housing (2100), and the transmissive-reflective unit (2420) is connected to the second housing (2200). The second housing (2200) approaches or moves away from the first housing (2100) under an action of the folding mechanism (2300).

## Description

This application claims priority to Chinese Patent Application No. 202211329435.1, filed with the China National Intellectual Property Administration on October 27, 2022 and entitled "VIRTUAL IMAGE DISPLAY DEVICE AND VEHICLE", which is incorporated herein by reference in its entirety.

### TECHNICAL FIELD

Embodiments of this application relate to the display field, and in particular, to a virtual image display device and a vehicle.

### BACKGROUND

With development of optical display technologies, display devices are gradually used in various scenarios. In a vehicle-mounted scenario, a portable scenario, and the like, a volume of the display device needs to be as small as possible.

In a reflective display device, for example, a head-up display (head-up display, HUD), an optical path is constant. Consequently, the display device has a large overall volume, and cannot be adapted to the foregoing vehicle-mounted scenario, the portable scenario, and the like that have a high requirement on the volume of the display device.

### SUMMARY

Embodiments of this application provide a virtual image display device and a vehicle, to reduce a volume and a thickness of the display device, thereby facilitating fusion of the device into an ambient environment and improving portability of the device.

According to a first aspect, an embodiment of this application provides a virtual image display device 2000. The virtual image display device 2000 includes a first housing 2100, a second housing 2200, a folding mechanism 2300, and a display system 2400. The folding mechanism 2300 is configured to connect the first housing 2100 to the second housing 2200. The display system 2400 includes an image source 2410, a transmissive-reflective unit 2420, and a reflective unit 2430. The image source 2410 and the reflective unit 2430 are connected to an inner wall of the first housing 2100, and the transmissive-reflective unit 2420 is connected to the second housing 2200. The second housing 2200 may approach or move away from the first housing 2100 under an action of the folding mechanism 2300.

In this embodiment of this application, the second housing 2200 approaches or moves away from the first housing 2100 under the action of the folding mechanism 2300, to implement switching between a working state and a folded state of the virtual image display device 2000. In the working state, the second housing 2200 is away from the first housing 2100, and a distance between components in the display system 2400 is long, so that a position relationship for imaging is satisfied, and the display system 2400 can implement imaging of imaging light to a human eye. In the folded state, the second housing 2200 is close to the first housing 2100, to reduce a volume and a thickness of the virtual image display device 2000, thereby facilitating fusion of the virtual image display device 2000 into an ambient environment and improving portability of the virtual image display device 2000.

Optionally, the transmissive-reflective unit 2420 may be a semi-transmissive and semi-reflective unit or a transmissive-reflective unit having another proportion (for example, 40% of transmittance and 60% of reflectivity, or 55% of transmittance and 45% of reflectivity), or may be a polarization transmissive-reflective unit (for example, transmitting S-polarized light and reflecting P-polarized light, or transmitting P-polarized light and reflecting S-polarized light). This is not limited in this application. Optionally, the reflective unit 2430 may be a curved mirror.

In an optional implementation, the folding mechanism 2300 includes a rotary shaft 2310 and a power unit 2320. The rotary shaft 2310 is configured to connect the first housing 2100 to the second housing 2200, and the power unit 2320 is connected to the second housing 2200. The power unit 2320 is configured to drive the second housing 2200 to approach or move away from the first housing 2100.

In this embodiment of this application, the rotary shaft 2310 matches the power unit 2320. The rotary shaft 2310 may be a rotation center, and the power unit 2320 may be a power source, to implement movement of the second housing 2200 relative to the first housing 2100, so that the second housing 2200 moves away from or approaches the first housing 2100.

In an optional implementation, the folding mechanism 2300 further includes a first connecting rod 2330, and the power unit 2320 is connected to the second housing 2200 via the first connecting rod 2330.

In this embodiment of this application, power provided or conducted by the power unit 2320 is conducted to the second housing 2200 via the first connecting rod 2330. If an action direction of the power fits a moving track of the second housing 2200, a requirement on a magnitude of the power provided by the power unit 2320 can be lowered.

In an optional implementation, the virtual image display device 2000 further includes a connecting unit 2340, and the first connecting rod 2330 is connected to the second housing 2200 via the connecting unit 2340.

In an optional implementation, the virtual image display device 2000 further includes a first connecting unit 2341, and the first connecting rod 2330 is fastened to the second housing 2200 via the first connecting unit 2341.

In this embodiment of this application, a direction of the first connecting rod 2330 is related to a moving direction of the second housing 2200 (for example, the directions are parallel to each other, or there is a specific included angle between the directions, or an extension direction is parallel to a tangent line of a point on the moving track of the second housing 2200). Therefore, the first connecting rod 2330 is fastened to the second housing 2200. In this way, the action direction of the power of the power unit 2320 can better fit the moving direction of the second housing 2200. This better saves the power of the power unit 2320.

In an optional implementation, the folding mechanism 2300 further includes a second connecting unit 2342 connecting the first connecting rod 2330 to the second housing 2200. The second connecting unit 2342 is configured to change a connection angle between the first connecting rod 2330 and the second housing 2200.

In this embodiment of this application, the second connecting unit 2342 is used to connect the first connecting rod 2330 to the second housing 2200. When a distance between the first housing 2100 and the second housing 2200 is short (for example, in the folded state), a surface of the first connecting rod 2330 may be parallel to that of the second housing 2200, or the first connecting rod 2330 may be close to the second housing 2200. This reduces a thickness and a volume that is of the virtual image display device 2000 and that is occupied by the first connecting rod 2330.

In an optional implementation, the folding mechanism 2300 further includes a second connecting rod 2350 connecting the rotary shaft 2310 to the connecting unit 2340.

In an optional implementation, the power unit 2320 includes a power source mechanism, and the power source mechanism is configured to move the second housing 2200.

In this embodiment of this application, the power source mechanism may be a motor, a pneumatic/hydraulic transmission mechanism, or the like. By using the power source mechanism, a position of the second housing 2200 may be automatically controlled, to implement an intelligent operation (for example, automatic unfolding or automatic folding) on the virtual image display device 2000.

In an optional implementation, the power unit 2320 includes a traction mechanism, and a user may move the second housing 2200 by using the traction mechanism.

In this embodiment of this application, the user may autonomously determine a position of the second housing 2200 by using the traction mechanism. In this way, the user can control the virtual image display device 2000.

In an optional implementation, the virtual image display device 2000 further includes a flexible sealing unit 2500. The flexible sealing unit 2500 forms confined space with the first housing 2100 and the second housing 2200, and the display system 2400 is in the confined space.

In this embodiment of this application, in a process in which the second housing 2200 approaches or moves away from the first housing 2100, the flexible sealing unit 2500 may be flexibly deformed, to ensure airtightness of the confined space and ensure dustproof and waterproof performance of components in the display system 2400 in the confined space.

In an optional implementation, the virtual image display device 2000 further includes a rotary structure 2600, and the rotary structure 2600 is configured to drive the first housing 2100 to rotate.

In this embodiment of this application, the rotary structure 2600 rotates the first housing 2100, so that the virtual image display device 2000 can meet different requirements in different scenarios. For example, in the working state, the rotary structure 2600 may rotate the first housing 2600, to drive the image source 2410 to move to a target image source position corresponding to a position of the human eye. In this way, an optical imaging system formed by the entire display system 2400 implements imaging of imaging light to the human eye. For example, in the folded state, the rotary structure 2600 may rotate the first housing 2100 to drive the second housing 2200 to change a position. In this way, an outer wall of the second housing 2200 adapts to an ambient environment surface.

In an optional implementation, the virtual image display device 2000 further includes a holder 2700. The holder 2700 is connected to the rotary structure 2600, and the holder 2700 is configured to support the first housing 2100.

In this embodiment of this application, a structure of the virtual image display device 2000 including the holder 2700 may be used as a portable display device.

According to a second aspect, an embodiment of this application provides a vehicle. The vehicle includes a structural device and the virtual image display device 2000 according to the first aspect. The virtual image display device 2000 is located in accommodating space of the structural device.

In an optional implementation, the structural device includes at least one of the following: a dashboard console, a backrest, an inner wall of the vehicle, an operation console, and a processing console.

For example, the operation console may be a rescue operation console in an ambulance or a kitchen operation console in a caravan, and the processing console may be a bar console in a caravan, a dining table in a passenger cabin, or an office desk. This is not limited in this application.

In an optional implementation, a rotary shaft 2310 of the virtual image display device 2000 is located inside the structural device.

In an optional implementation, a folding mechanism 2300 is configured to move a second housing 2200 into or out of the accommodating space of the structural device.

In an optional implementation, a rotary structure 2600 is configured to drive a first housing 2100 to rotate, to rotate the folded virtual image display device 2000 into the accommodating space of the structural device.

In an optional implementation, the rotary structure 2600 is configured to drive the first housing 2100 to rotate, to enable an outer wall of the second housing 2200 to adapt to an ambient environment surface of the structural device.

In an optional implementation, the rotary structure 2600 is configured to drive the first housing 2100 to rotate, to enable an image source 2410 on the first housing 2100 to move to a target image source position corresponding to a position of a human eye. The folding mechanism 2300 is configured to enable the second housing 2200 to move away from the first housing 2100, so that a transmissive-reflective unit 2420 on the second housing 2200 moves to a position of the transmissive-reflective unit corresponding to the target image source position.

In this embodiment of this application, under an action of the rotary structure 2600 and the folding mechanism 2300, components in a display system 2400 move to positions corresponding to the position of the human eye, to implement imaging of imaging light to the human eye.

In an optional implementation, the vehicle further includes a sensing unit, and the sensing unit is configured to detect the position of the human eye. Optionally, the position of the human eye may be used to determine the target image source position.

### BRIEF DESCRIPTION OF DRAWINGS

FIG. 1 is a diagram of a structure of a reflective display device according to this application;
FIG. 2 is a diagram of a structure of a virtual image display device 2000 according to an embodiment of this application;
FIG. 3 is a diagram of a virtual image display device 2000 in different states according to an embodiment of this application;
FIG. 4 is a diagram of a structure of a folding mechanism 2300 according to an embodiment of this application;
FIG. 5 is a diagram of a structure of a power source mechanism 2321 according to an embodiment of this application;
FIG. 6 is a diagram of a structure of a traction mechanism 2322 according to an embodiment of this application;
FIG. 7 is a diagram of a structure of a virtual image display device 2000 including a first connecting rod 2330 according to an embodiment of this application;
FIG. 8 is a diagram of a structure of a virtual image display device 2000 including a movable connecting unit 2340 according to an embodiment of this application;
FIG. 9 is a diagram of a thickness of a virtual image display device 2000 with a variable connection angle according to an embodiment of this application;
FIG. 10 is a diagram of a structure of a virtual image display device 2000 including a second connecting rod 2350 according to an embodiment of this application;
FIG. 11 is a diagram of a structure of a virtual image display device 2000 whose folding unit 2300 is on a first housing 2100 according to an embodiment of this application;
FIG. 12 is a diagram of a structure of a virtual image display device 2000 including a flexible sealing unit 2500 according to an embodiment of this application;
FIG. 13 is a diagram of a structure of a virtual image display device 2000 including a rotary structure 2600 according to an embodiment of this application;
FIG. 14 is a diagram of a virtual image display device 2000 in different states according to an embodiment of this application;
FIG. 15 is a diagram of a structure of a virtual image display device 2000 including a holder 2700 according to an embodiment of this application;
FIG. 16 is a diagram of a structure of a vehicle according to an embodiment of this application; and
FIG. 17 is a diagram of a circuit of a virtual image display device 2000 according to an embodiment of this application.

### DESCRIPTION OF EMBODIMENTS

The following describes embodiments of this application with reference to the accompanying drawings. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variants are intended to cover the non-exclusive inclusion, so that a process, method, system, product, or device that includes a series of units is not necessarily limited to those units, but may include other units not expressly listed or inherent to such a process, method, system, product, or device. In addition, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

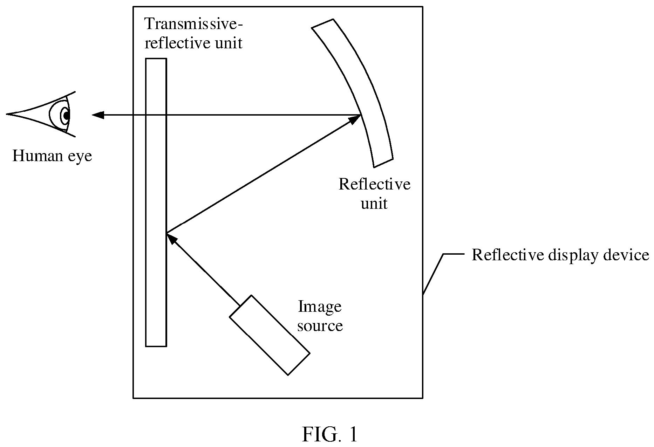

FIG. 1 is a diagram of a structure of a reflective display device. As shown in FIG. 1, the reflective display device includes an image source, a reflective unit, and a transmissive-reflective unit. Imaging light emitted by the image source is projected to a human eye through an optical path of the transmissive-reflective unit, the reflective unit, and the transmissive-reflective unit, to implement imaging. For an optical system of the display device, there is a specific optical path length of imaging light from the image source to each surface of the transmissive-reflective unit and the reflective unit. Therefore, a specific distance is required between the image source and each of the transmissive-reflective unit and the reflective unit. As a result, the reflective display device has a large volume.

In a vehicle-mounted scenario, a portable scenario, and the like, a high requirement is imposed on the volume of the display device. For example, in the vehicle-mounted scenario, the display device may be a head-up display (head-up display, HUD) device, and the HUD may be mounted on a dashboard console or a backrest. The HUD has a large volume, and therefore large space needs to be reserved on the dashboard console or the backrest to mount the HUD. This greatly limits design of an internal structure of the dashboard console or the backrest. Alternatively, the HUD may be protruded from a surface of a dashboard console or a backrest. However, this may result in occupation of space in the vehicle. For example, in the portable scenario, if the display device has a large volume, portability is affected.

To resolve a problem of a large volume of the reflective display device, an embodiment of this application provides a virtual image display device. The virtual image display device is folded in a non-working state by using a folding mechanism, to reduce a thickness of the device, thereby facilitating fusion of the device into an ambient environment, improving portability of the device, and reducing a volume of the device.

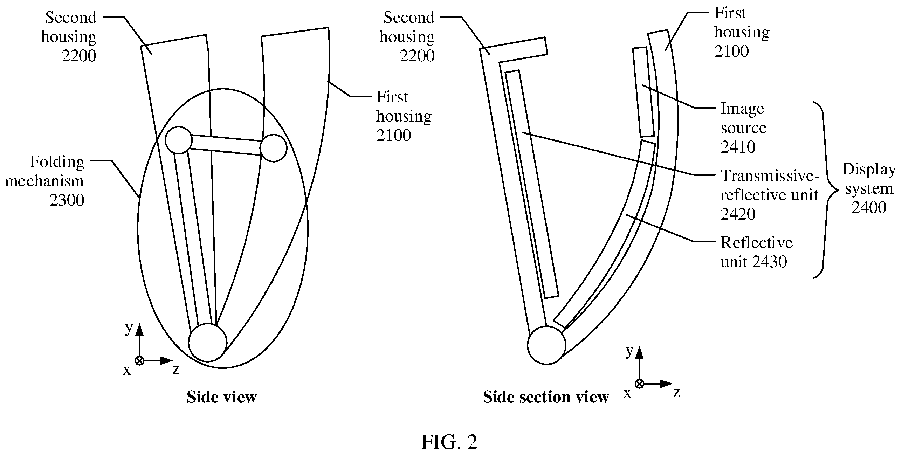

As shown in FIG. 2, a virtual image display device 2000 provided in an embodiment of this application includes a first housing 2100, a second housing 2200, a folding mechanism 2300, and a display system 2400. The display system 2400 includes an image source 2410, a transmissive-reflective unit 2420, and a reflective unit 2430. The image source 2410 and the reflective unit 2430 are connected to an inner wall of the first housing 2100, and the transmissive-reflective unit 2420 is connected to the second housing 2200. The folding mechanism 2300 is configured to connect the first housing 2100 to the second housing 2200. The folding mechanism 2300 is configured to connect the first housing 2100 to the second housing 2200. The second housing 2200 approaches or moves away from the first housing 2100 under an action of the folding mechanism 2300.

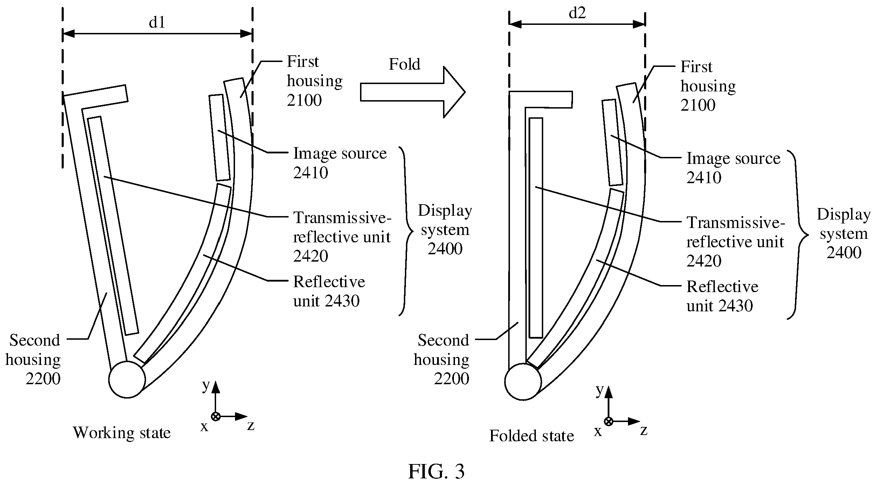

In an embodiment of this application, a working state and a folded state of the virtual image display device 2000 may be defined. As shown in FIG. 3, in the working state, the second housing 2200 is away from the first housing 2100, a position relationship between the image source 2410, the transmissive-reflective unit 2420, and the reflective unit 2430 in the display system 2400 satisfies a position relationship for imaging, and imaging light emitted by the image source 2410 is projected to a human eye via the transmissive-reflective unit 2420 and the reflective unit 2430, to implement imaging of the imaging light to the human eye. In the folded state, the first housing 2100 is close to the second housing 2200, to implement folding of the virtual image display device, thereby reducing a volume of the virtual image display device.

For example, as shown in FIG. 3, the first housing 2100 approaches the second housing 2200 under the action of the folding mechanism 2300. A thickness of the entire virtual image display device 2000 is reduced from d1 in the working state to d2 in the folded state. Compared with those in the working state, a volume and a thickness in the folded state are smaller.

In an embodiment of this application, the second housing 2200 approaches or moves away from the first housing 2100 under the action of the folding mechanism 2300, to implement switching between the working state and the folded state of the virtual image display device 2000. In the working state, the display system 2400 may work normally, to implement imaging of imaging light to the human eye. In the folded state, the volume and the thickness of the virtual image display device 2000 may be reduced.

The foregoing describes an overall structure of the virtual image display device 2000 provided in this embodiment of this application. The following describes components (for example, the folding mechanism 2300 and the display system 2400) of the virtual image display device 2000 in detail.

For the display system 2400, the image source 2410 may be a thin-film transistor (thin-film transistor, TFT), an organic light-emitting diode (organic light-emitting diode, OLED), a sub-millimeter light-emitting diode mini LED, a micron light-emitting diode micro LED, a liquid crystal on silicon (liquid crystal on silicon, LCOS), a digital micromirror device (digital micromirror device, DMD), a projector, or the like; and the transmissive-reflective unit 2420 may be a planar transmissive-reflective unit, a cambered transmissive-reflective unit, or the like. This is not limited in this application.

Optionally, the image source 2410 and the reflective unit 2430 may be integrated onto the inner wall of the first housing 2100 through a screw, a fastener, bonding, or the like. This is not limited in this application. Optionally, the transmissive-reflective unit 2420 may be integrated onto the second housing through bonding, structural frame fastening, or the like. This is not limited in this application.

Optionally, the transmissive-reflective unit 2420 may be a semi-transmissive and semi-reflective unit or a transmissive-reflective unit having another proportion (for example, 40% of transmittance and 60% of reflectivity, or 55% of transmittance and 45% of reflectivity), or may be a polarization transmissive-reflective unit (for example, transmitting S-polarized light and reflecting P-polarized light, or transmitting P-polarized light and reflecting S-polarized light). This is not limited in this application. Optionally, the reflective unit 2430 may be a curved mirror.

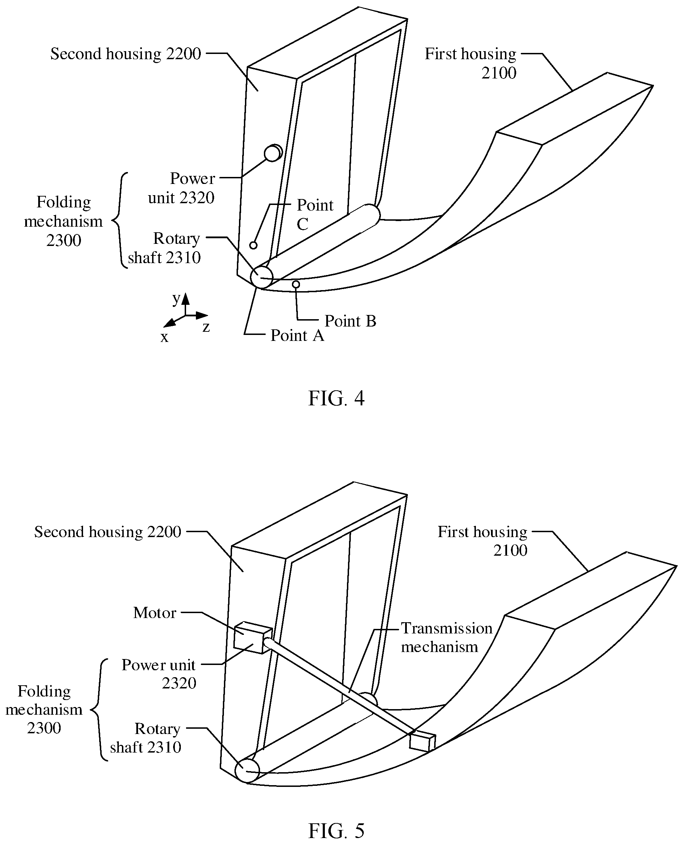

For the folding mechanism 2300, in an example, the folding mechanism 2300 may include a rotary shaft 2310 and a power unit 2320. As shown in FIG. 4, the rotary shaft 2310 is configured to connect the first housing 2100 to the second housing 2200. The second housing 2200 may rotate around the rotary shaft 2310, to implement a change of a position relationship between the second housing 2200 and the first housing 2100. The power unit 2320 is connected to the second housing 2200, and is configured to drive the second housing 2200 to move. In this way, the second housing 2200 approaches or moves away from the first housing 2100, to implement switching between the working state and the folded state described above.

In the folding mechanism 2300, the rotary shaft 2310 may be in different forms. For example, the rotary shaft 2310 may be a shaft on the first housing 2100, and the second housing 2200 may include a hole matching the rotary shaft 2310. The second housing 2200 may rotate around the rotary shaft 2310 through matching between the hole and the rotary shaft 2310, to change the position relationship between the second housing 2200 and the first housing 2100.

Optionally, the rotary shaft 2310 may alternatively be a shaft on the second housing 2200, and the first housing 2100 includes a hole matching the rotary shaft 2310. Alternatively, the rotary shaft 2310 may be a shaft independent of the first housing 2100 and the second housing 2200, and a hole matching the rotary shaft 2310 is provided on each of the first housing 2100 and the second housing 2200. This is not limited in this application.

Optionally, as shown in FIG. 4, the rotary shaft 2310 may be at one end of the first housing 2100 and the second housing 2200 (namely, at a position of a point A in FIG. 4). In addition, the rotary shaft 2310 may alternatively be at another position, for example, at a position of a point B or a position of a point C in FIG. 4, provided that the rotary shaft 2310 is on a same side of components in the optical system 2400 (for example, as shown in FIG. 4, the rotary shaft 2310 is below the image source 2410, the transmissive-reflective unit 2420, and the reflective unit 2430). This is not limited in this application.

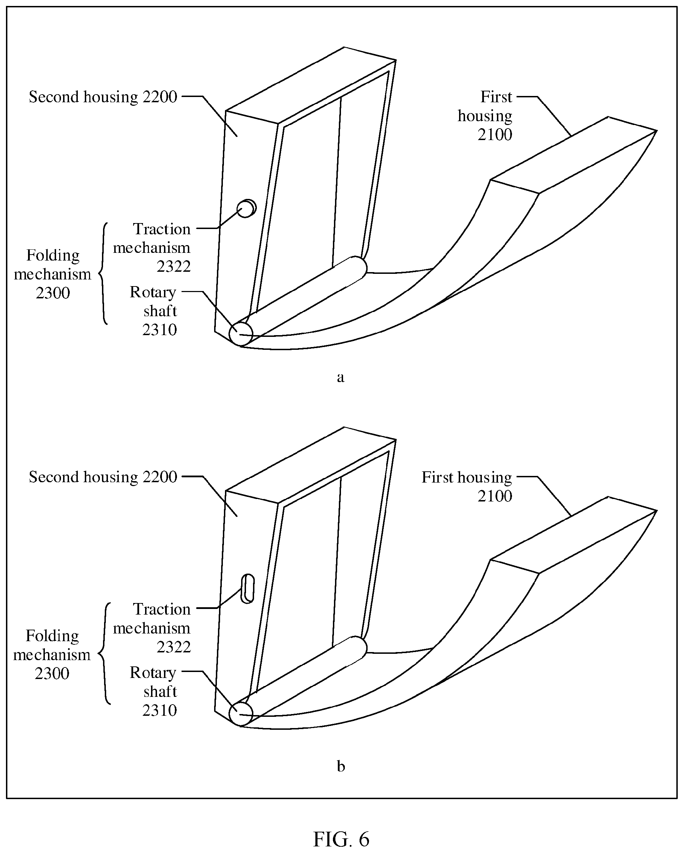

In the folding mechanism 2300, the power unit 2320 may be in different forms, for example, may be a power source mechanism 2321 shown in FIG. 5 or a traction mechanism 2322 shown in FIG. 6.

For example, the power unit 2320 may be the power source mechanism 2321, and the power source mechanism 2321 is configured to provide power, to implement movement of the second housing 2200. Optionally, the power source mechanism 2321 may be a motor, a pneumatic/hydraulic transmission mechanism, or the like. This is not limited in this application.

Optionally, the power source mechanism 2321 may implement movement of the second housing 2200 relative to the first housing 2100. For example, the power source mechanism 2321 may be a motor on the first housing 2100, and transmits power to the second housing 2200 through a transmission mechanism, to implement movement of the second housing 2200 relative to the first housing 2100. Alternatively, the power source mechanism 2321 may be a motor in an ambient environment (for example, a backrest of a vehicle) of the virtual image display device 2000, and transmits power to the second housing 2200 through a transmission mechanism, to implement movement of the second housing 2200 relative to the first housing 2100.

Optionally, the power source mechanism 2321 may implement movement of the first housing 2100 relative to the second housing 2200. For example, as shown in FIG. 5, the power source mechanism 2321 may be a motor on the second housing 2200, and transmits power to the first housing 2100 through a transmission mechanism, to implement movement of the first housing 2100 relative to the second housing 2200. Alternatively, the power source mechanism 2321 may be a motor in an ambient environment (for example, a backrest of a vehicle) of the virtual image display device 2000, and transmits power to the first housing 2100 through a transmission mechanism, to implement movement of the first housing 2100 relative to the second housing 2200.

Optionally, other than the motor, the power source mechanism 2321 may be a pneumatic/hydraulic transmission mechanism or the like. This is not limited in this application.

Optionally, the transmission mechanism may implement power transmission through belt transmission, a sprocket, a rack and pinion, a worm gear and worm, a screw, a crank, a cam, or the like. This is not limited in this application.

For example, the power unit 2320 may alternatively be the traction mechanism 2322, and a user may move the second housing 2200 by using the traction mechanism 2322. Optionally, as shown in FIG. 6, the traction mechanism 2322 may be a protrusion (as shown in a in FIG. 6) or a slot (as shown in b in FIG. 6) on the second housing 2200. This is not limited in this application.

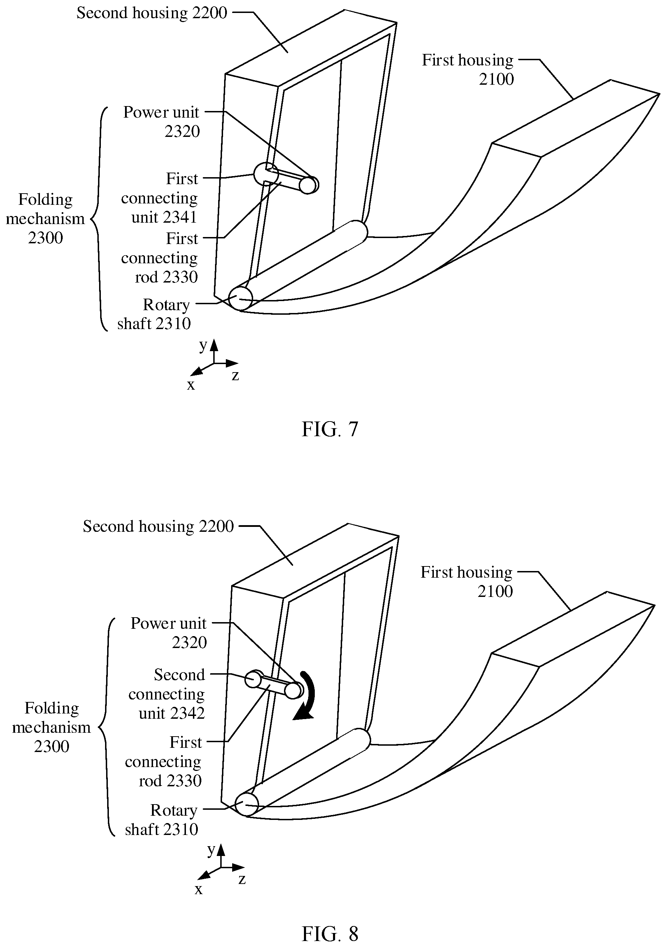

Based on the foregoing folding mechanism 2300 including the rotary shaft 2310 and the power unit 2320, movement of the second housing 2200 can be implemented. In this way, the second housing 2200 approaches or moves away from the first housing. Optionally, as shown in FIG. 7, the folding mechanism 2300 may further include a first connecting rod 2330. An extension direction of the first connecting rod 2330 is related to a direction in which the second housing 2200 approaches or moves away from the first housing 2100 (for example, the directions are parallel to each other, or there is a specific included angle between the directions, or the extension direction is parallel to a tangent line of a point on a moving track of the second housing 2200). The power unit 2320 is connected to the second housing 2200 via the first connecting rod 2330. In this embodiment of this application, the power provided or conducted by the power unit 2320 is conducted to the second housing 2200 via the first connecting rod 2330, so that an action direction of the power on the second housing 2200 fits a moving track of the second housing 2200. In this way, a requirement on a magnitude of the power provided by the power unit 2320 can be lowered.

For example, if the power unit 2320 is a motor, the first connecting rod 2330 can lower a requirement on a magnitude of power of the motor, reduce friction generated when the motor moves, and prolong a service life of the motor and even the entire virtual image display device 2000. If the power unit 2320 is a traction mechanism, the first connecting rod 2330 can save an effort of the user. Because of presence of the first connecting rod 2330, the user can drive the second housing 2200 to move by applying a small force.

In this embodiment of this application, a connection between the first connecting rod 2330 and the second housing 2200 may be implemented by using a connecting unit 2340. A manner of connecting the first connecting rod 2330 to the second housing 2200 is not limited in embodiments of this application. Optionally, the connecting unit 2340 may include a first connecting unit 2341 and a second connecting unit 2342.

As shown in FIG. 7, the first connecting unit 2341 is configured to fasten the first connecting rod 2330 to the second housing 2200. To be specific, in a process in which the power unit 2320 and the first connecting rod 2330 drive the second housing 2200 to approach or move away from the first housing 2100, a connection angle between the first connecting rod 2330 and the second housing 2200 remains unchanged because of fastening of the first connecting unit 2341. The connection structure is simple and easy to implement.

A direction of the first connecting rod 2330 is related to a moving direction of the second housing 2200. Therefore, the first connecting rod 2330 is fastened to the second housing 2200. In this way, an action direction of the power of the power unit 2320 can better fit the moving direction of the second housing 2200. This better saves power of the power unit 2320.

Optionally, as shown in FIG. 8, the connecting unit 2340 connecting the first connecting rod 2330 and the second housing 2200 may alternatively be movable, and the second connecting unit 2342 is configured to change a connection angle between the first connecting rod 2330 and the second housing 2200. For example, the second connecting unit 2342 may be a protruding shaft on the second housing 2200, and the first connecting rod 2330 is provided with a hole matching the shaft. In a process in which the second housing 2200 approaches or moves away from the first housing 2100, the connection angle between the first connecting rod 2330 and the second housing 2200 may be changed.

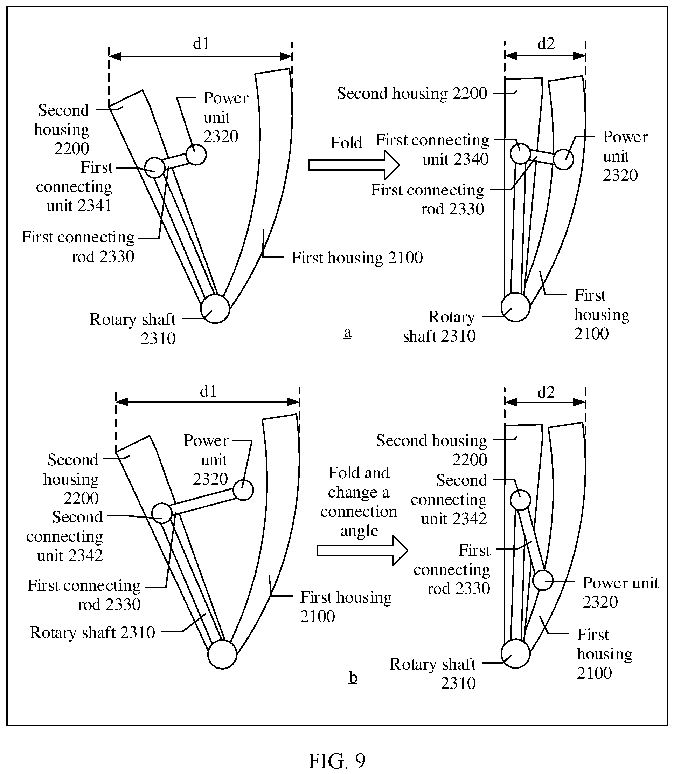

In this embodiment of this application, a length of the first connecting rod 2330 may be determined based on a mechanical design or the like. As shown in a in FIG. 9, if the determined length of the first connecting rod 2330 is short, the first connecting rod 2330 may be fastened to the second housing 2200 (that is, fastening shown in FIG. 7), and the thickness of the virtual image display device 2000 changes from d1 to d2 through folding.

As shown in b in FIG. 9, if the determined length of the first connecting rod 2330 is long, the connection angle between the first connecting rod 2330 and the second housing 2200 may be changed (namely, the movable connection shown in FIG. 8). In a folding process, the connection angle between the first connecting rod 2330 and the second housing may be further changed, so that the first connecting rod 2330 folds toward the second housing 2200. The thickness of the virtual image display device 2000 changes from d1 to d2 through folding and the change of the connection angle.

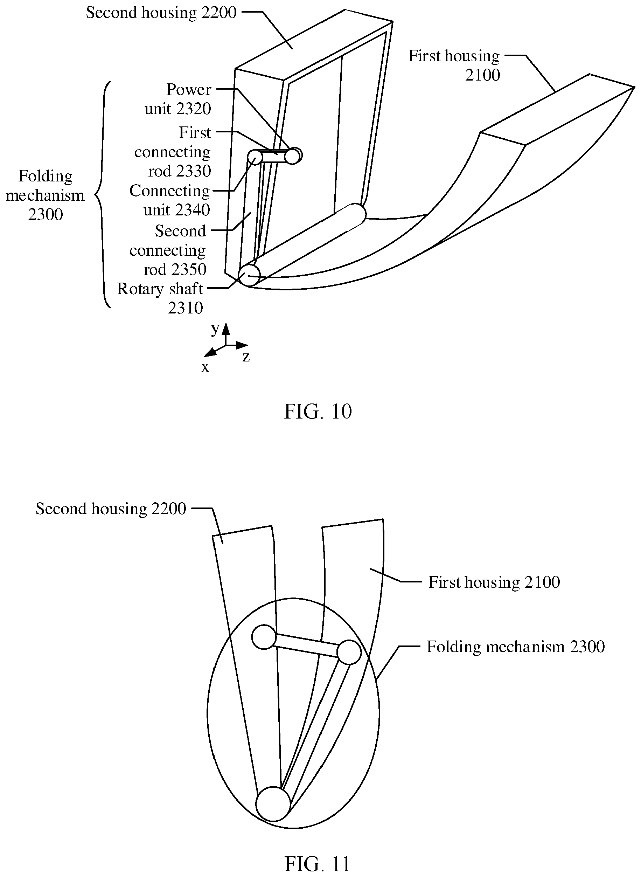

Optionally, as shown in FIG. 10, the folding mechanism 2300 may further include a second connecting rod 2350, and the second connecting rod 2350 is configured to connect the rotary shaft to the first connecting rod.

Optionally, as shown in FIG. 11, the folding mechanism 2300 may be placed on the first housing 2100, so that the first housing 2100 approaches or moves away from the second housing 2200. This is not limited in this application. If the folding mechanism 2300 is placed on the first housing 2100, the power unit 2320, the first connecting rod 2330, the second connecting rod 2350, and the like are also connected to the first housing 2100. For a connection relationship, refer to the descriptions of FIG. 2 to FIG. 10. Details are not described herein again.

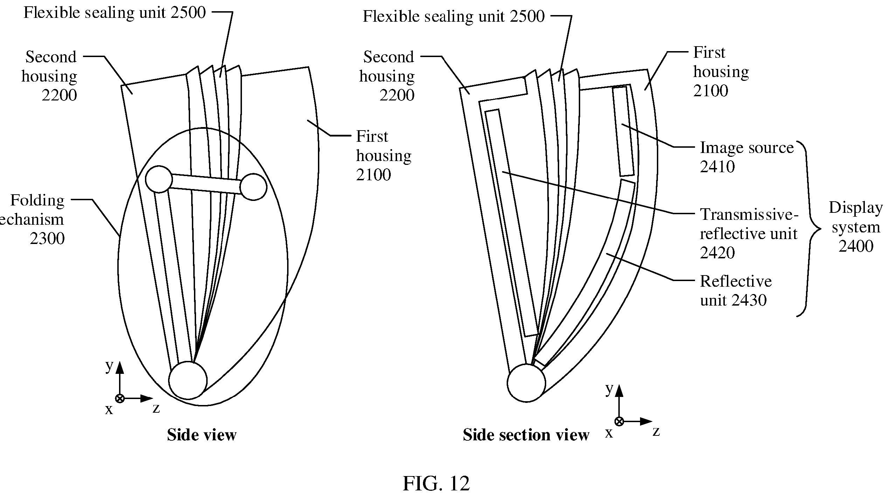

The foregoing describes a structure of the folding mechanism 2300, and the following describes other components of the virtual image display device 2000 in detail. Optionally, as shown in FIG. 12, the virtual image display device 2000 may further include a flexible sealing unit 2500. The flexible sealing unit 2500 is configured to protect components in the display system 2400. Specifically, the flexible sealing unit 2500 forms confined space with the first housing 2100 and the second housing 2200, and the display system 2400 is in the confined space. In a process in which the second housing 2200 approaches or moves away from the first housing 2100, the flexible sealing unit 2500 may be flexibly deformed, to ensure airtightness of the confined space and ensure dustproof and waterproof performance of components in the display system 2400 in the confined space.

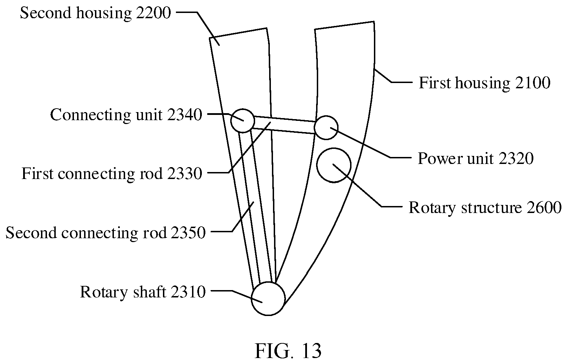

Optionally, as shown in FIG. 13, the virtual image display device 2000 may further include a rotary structure 2600. The rotary structure 2600 is configured to drive the first housing 2100 to rotate, so that the virtual image display device 2000 matches a corresponding position relationship in different states (for example, the working state or the folded state).

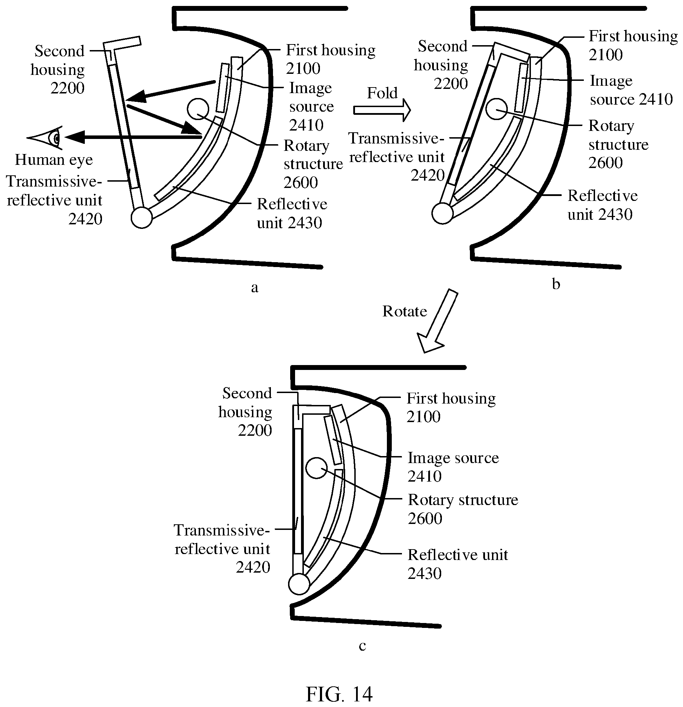

For example, as shown in a in FIG. 14, in the working state, the rotary structure 2600 may rotate the first housing 2100, to drive the image source 2410 to change a position, so that the image source 2410 moves to a target image source position corresponding to a position of a human eye. In this way, an optical imaging system formed by the entire display system 2400 implements imaging of imaging light to the human eye.

As shown in b in FIG. 14, the second housing 2200 is close to the first housing 2100, and the virtual image display device 2000 is in the folded state. In this case, an outer wall of the second housing 2200 does not adapt to an ambient environment surface. Therefore, as shown in c in FIG. 14, the rotary structure 2600 rotates the first housing 2100, to drive the second housing 2200 to change a position. In this way, the outer wall of the second housing 2200 adapts to the ambient environment surface.

It should be noted that the ambient environment surface herein may be an extension surface of the ambient environment surface shown in c in FIG. 14. For example, if a vertical surface in c in FIG. 14 is a surface of a backrest, the ambient environment surface may be an extension surface of the backrest surface. Optionally, other than the backrest surface, the ambient environment surface may be an extension surface of another surface, for example, an extension surface of a dashboard console surface or a center console surface. This is not limited in this application.

Optionally, other than the extension surface of the ambient environment surface, the ambient environment surface may be a preset mounting surface or the like. This is not limited in this application. For example, if the virtual image display device 2000 is a height-adjustable HUD in a vehicle, the HUD is placed in a preset mounting surface when the HUD is not used, and the HUD is lifted to a height that can be seen by a human eye when the HUD is used. In this case, the ambient environmental surface may be the preset mounting surface.

Optionally, in a process in which the virtual image display device 2000 switches from the working state to the folded state, as shown in FIG. 14, the virtual image display device 2000 may be folded and then rotated, or may be rotated and then folded, or folded while rotating. This is not limited in this application. Correspondingly, in a process in which the virtual image display device 2000 switches from the folded state to the working state, a sequence of unfolding and rotation is also not limited.

Optionally, the rotary structure 2600 may be a rotary shaft, and may drive, by using a transmission mechanism, the rotary shaft to rotate, to drive the first housing 2100 to rotate. Optionally, the transmission mechanism may be a gear, a worm gear and worm, a flexible shaft, or the like. This is not limited in this application.

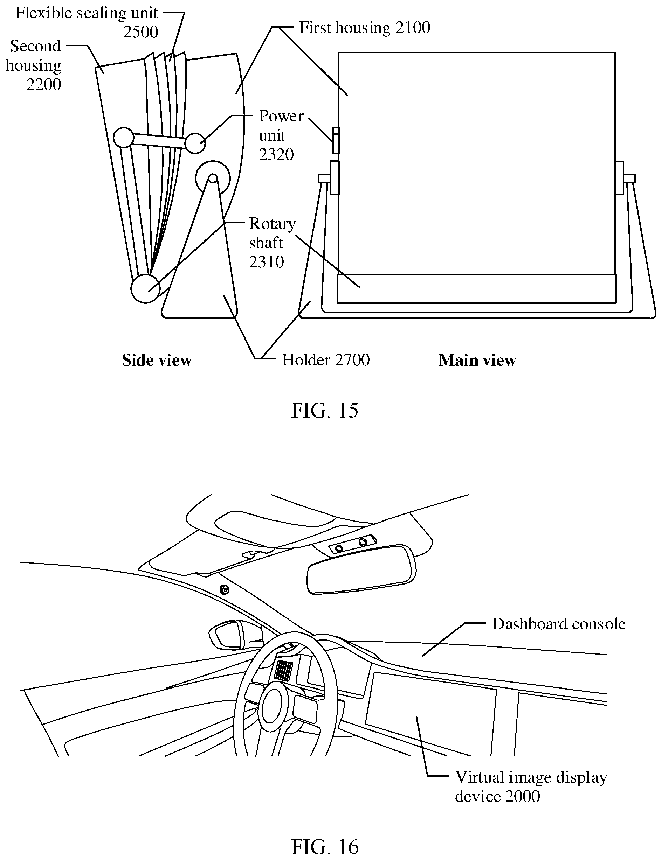

Optionally, as shown in FIG. 15, the virtual image display device 2000 may further include a holder 2700. The holder 2700 is connected to the rotary structure 2600 and is configured to support the first housing 2100. A structure of the virtual image display device 2000 shown in FIG. 15 may be used as a portable display device.

Optionally, in an embodiment of this application, other than being used as a portable display device, the virtual image display device 2000 may be used in a vehicle. As shown in FIG. 16, an embodiment of this application further provides a vehicle. The vehicle includes a dashboard console and the virtual image display device 2000 described above. The virtual image display device 2000 is located in accommodating space of the dashboard console.

Optionally, a rotary shaft 2310 of the virtual image display device 2000 may be located inside the dashboard console.

Optionally, a folding mechanism 2300 may enable a second housing 2200 to move into or out of the accommodating space of the structural device, to implement switching of the virtual image display device 2000 between a folded state and a working state.

Optionally, in a case of entering the working state, a rotary structure 2600 in the virtual image display device 2000 may drive a first housing 2100 to rotate, to enable an image source 2410 on the first housing 2100 to move to a target image source position corresponding to a position of a human eye. The folding mechanism 2300 may enable the second housing 2200 to move away from the first housing 2100, so that a transmissive-reflective unit 2420 on the second housing 2200 moves to a position of the transmissive-reflective unit corresponding to the target image source position.

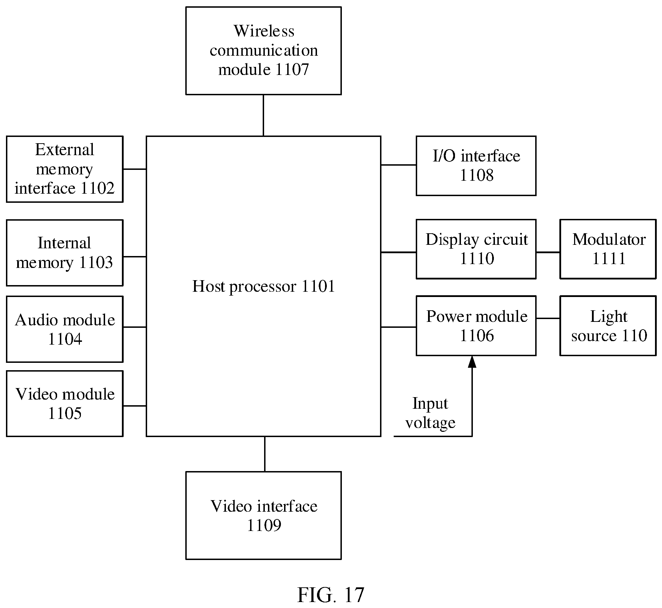

Optionally, the vehicle may further include a sensing unit, and the sensing unit is configured to detect the position of the human eye. The position of the human eye may be used to determine the target image source position. After the sensing unit detects the position of the human eye, a processor (for example, a host processor 1101 in FIG. 17) of the virtual image display device 2000 may adjust a rotation angle of the rotary structure 2600 based on the position of the human eye. In other words, a pitch angle of the virtual image display device 2000 may be automatically adjusted based on the actual position of the human eye.

Optionally, in a case of entering the folded state, the rotary structure 2600 in the virtual image display device 2000 may drive the first housing 2100 to rotate, to rotate the folded virtual image display device 2000 into the accommodating space in the dashboard console. Further, the rotary structure 2600 may drive the first housing 2100 to rotate, to enable an outer wall of the second housing 2200 to adapt to an ambient environment surface of the dashboard console.

Optionally, other than being mounted on the dashboard console, the virtual image display device 2000 provided in this embodiment of this application may be mounted on another structural device of the vehicle, for example, a backrest, an inner wall of the vehicle, an operation console, or a processing console. This is not limited in this application.

Optionally, if the virtual image display device 2000 is mounted on the backrest/the inner wall of the vehicle/the operation console/the processing console, the rotary structure 2600 may drive the first housing 2100 to rotate, to enable the outer wall of the second housing 2200 to adapt to a surface of the backrest/the inner wall of the vehicle/the operation console/the processing console.

Optionally, the operation console may be a rescue operation console in an ambulance, a kitchen operation console in a caravan, or the like, and the processing console may be a bar console in a caravan, a dining table in a passenger cabin, an office desk, or the like. This is not limited in this application.

Optionally, the vehicle provided in this embodiment of this application may be a motor vehicle, a train, an airplane, or the like. This is not limited in this application.

FIG. 17 is a diagram of a circuit of a virtual image display device 2000 according to an embodiment of this application. As shown in FIG. 17, a circuit in the virtual image display device 2000 mainly includes a host processor (host CPU) 1101, an external memory interface 1102, an internal memory 1103, an audio module 1104, a video module 1105, a power module 1106, a wireless communication module 1107, an I/O interface 1108, a video interface 1109, a display circuit 1110, a modulator 1111, and the like. The host processor 1101 and components around the host processor 1101 such as the external memory interface 1102, the internal memory 1103, the audio module 1104, the video module 1105, the power module 1106, the wireless communication module 1107, the I/O interface 1108, the video interface 1109, and the display circuit 1110 may be connected through a bus. The host processor 1101 may be referred to as a front-end processor.

In addition, the diagram of the circuit in this embodiment of this application does not constitute a specific limitation on the virtual image display device 2000. In some other embodiments of this application, the virtual image display device 2000 may include more or fewer components than those shown in the figure, or combine some components, or split some components, or have a different component arrangement. The components shown in the figure may be implemented by hardware, software, or a combination of software and hardware.

The host processor 1101 includes one or more processing units. For example, the host processor 1101 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processor (neural-network processing unit, NPU). Different processing units may be independent components, or may be integrated into one or more processors.

A memory may be further disposed in the host processor 1101, and is configured to store instructions and data. In some embodiments, the memory in the host processor 1101 is a cache. The memory may store instructions or data just used or cyclically used by the host processor 1101. If the host processor 1101 needs to use the instructions or the data again, the host processor may directly invoke the instructions or the data from the memory. This avoids repeated access, and reduces a waiting time of the host processor 1101, thereby improving system efficiency.

In some embodiments, the virtual image display device 2000 may further include a plurality of input/output (input/output, I/O) interfaces 1108 connected to the host processor 1101. The I/O interface 1108 may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The I/O interface 1108 may be connected to devices such as a mouse, a touchpad, a keyboard, a camera, a speaker/horn, and a microphone, or may be connected to a physical button (for example, a volume button, a brightness adjustment button, or a power-on/off button) on the virtual image display device 2000.

The external memory interface 1102 may be configured to connect to an external storage card, for example, a micro SD card, to extend a storage capability of the virtual image display device 2000. The external memory card communicates with the host processor 1101 through the external memory interface 1102, to implement a data storage function.

The internal memory 1103 may be configured to store computer-executable program code. The executable program code includes instructions. The internal memory 1103 may include a program storage area and a data storage area. The program storage region may store an operating system, an application required by at least one function (for example, a call function or a time setting function), and the like. The data storage area may store data (such as a phone book and a world clock) and the like created when the virtual image display device 2000 is used. In addition, the internal memory 1103 may include a high-speed random-access memory, or may include a nonvolatile memory, for example, at least one magnetic disk storage device, a flash memory component, or a universal flash storage (universal flash storage, UFS). The host processor 1101 runs the instructions stored in the internal memory 1103 and/or the instructions stored in the memory disposed in the host processor 1101, to execute various function applications of the virtual image display device 2000 and data processing.

The virtual image display device 2000 may implement an audio function by using the audio module 1104, the application processor, and the like, for example, music playing and a sound call.

The audio module 1104 is configured to convert digital audio information into an analog audio signal for output, and is also configured to convert an analog audio input into a digital audio signal. The audio module 1104 may be further configured to encode and decode audio signals, for example, perform voice playing or voice recording. In some embodiments, the audio module 1104 may be disposed in the host processor 1101, or some functional modules in the audio module 1104 are disposed in the host processor 1101.

The video interface 1109 may receive an audio and video signal input externally, and may be specifically a high-definition multimedia interface (high-definition multimedia interface, HDMI), a digital visual interface (digital visual interface, DVI), a video graphics array (video graphics array, VGA), a display port (display port, DP), or the like. The video interface 1109 may alternatively output a video. When the virtual image display device 2000 is used as a head-up display, the video interface 1109 may receive a speed signal and a battery level signal that are input by a peripheral device, and may also receive an AR video signal input externally. When the virtual image display device 2000 is used as a projector, the video interface 1109 may receive a video signal input by an external computer or a terminal device.

The video module 1105 may decode a video input by the video interface 1109, for example, perform H.264 decoding. The video module may further encode a video collected by the virtual image display device 2000, for example, perform H.264 encoding on a video collected by an external camera. In addition, the host processor 1101 may also decode a video input by the video interface 1109, and then output an image signal obtained through decoding to the display circuit 1110.

The display circuit 1110 and the modulator 1111 are configured to display a corresponding image. In this embodiment, the video interface 1109 receives a video source signal input externally, the video module 1105 performs decoding and/or digitization processing and outputs one or more image signals to the display circuit 1110, and the display circuit 1110 drives, based on the input image signal, the modulator 1111 to perform imaging on incident polarized light, to output imaging light. In addition, the host processor 1101 may also output an image signal to the display circuit 1110.

The power module 1106 is configured to supply power to the host processor 1101 and a light source 110 based on input power (for example, a direct current). The power module 1106 may include a rechargeable battery, and the rechargeable battery may supply power to the host processor 1101 and the light source 110. Light emitted by the light source 110 may be transmitted to the modulator 1111 for imaging, to form an image light signal.

The wireless communication module 1107 may enable the virtual image display device 2000 to perform wireless communication externally, and may provide a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near-field communication (near-field communication, NFC) technology, an infrared (infrared, IR) technology, and the like. The wireless communication module 1107 may be one or more devices integrating at least one communication processor module. The wireless communication module 1107 receives an electromagnetic wave through an antenna, performs frequency modulation and filtering processing on an electromagnetic wave signal, and sends a processed signal to the host processor 1101. The wireless communication module 1107 may further receive a to-be-sent signal from the host processor 1101, perform frequency modulation and amplification on the signal, and convert a processed signal into an electromagnetic wave for radiation through the antenna.

Besides, other than being input through the video interface 1109, video data decoded by the video module 1105 may be received in a wireless manner through the wireless communication module 1107 or read from an external memory. For example, the virtual image display device 2000 may receive the video data from the terminal device or a vehicle-mounted infotainment system through a wireless local area network in a vehicle. The virtual image display device 2000 may further read audio and video data stored in the external memory.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the current technology, or all or some of the technical solutions may be implemented in the form of software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk drive, a read-only memory (read-only memory, ROM), a random-access memory (random-access memory, RAM), a magnetic disk, or an optical disc.

## Claims

1. A virtual image display device (2000), comprising a first housing (2100), a second housing (2200), a folding mechanism (2300) connecting the first housing (2100) to the second housing (2200), and a display system (2400), wherein
the display system (2400) comprises an image source (2410), a transmissive-reflective unit (2420), and a reflective unit (2430), wherein the image source (2410) and the reflective unit (2430) are connected to an inner wall of the first housing (2100), and the transmissive-reflective unit (2420) is connected to the second housing (2200); and
the second housing (2200) approaches or moves away from the first housing (2100) under an action of the folding mechanism (2300).

2. The device according to claim 1, wherein the folding mechanism (2300) comprises a rotary shaft (2310) connecting the first housing (2100) and the second housing (2200), and a power unit (2320) connected to the second housing (2200), wherein
the power unit (2320) is configured to drive the second housing (2200) to approach or move away from the first housing (2100).

3. The device according to claim 2, wherein the folding mechanism (2300) further comprises a first connecting rod (2330), and the power unit (2320) is connected to the second housing (2200) via the first connecting rod (2330).

4. The device according to claim 3, further comprising a first connecting unit (2341) configured to connect the first connecting rod (2330) to the second housing (2200).

5. The device according to claim 3, wherein the folding mechanism (2300) further comprises a second connecting unit (2342) connecting the first connecting rod (2330) to the second housing (2200), and the second connecting unit (2342) is configured to change a connection angle between the first connecting rod (2330) and the second housing (2200).

6. The device according to any one of claims 3 to 5, wherein the folding mechanism (2300) further comprises a second connecting rod (2350) connecting the rotary shaft (2310) to a connecting unit (2340).

7. The device according to any one of claims 2 to 6, wherein the power unit (2320) comprises a power source mechanism or a traction mechanism, wherein the power source mechanism or the traction mechanism is configured to move the second housing (2200).

8. The device according to any one of claims 1 to 7, further comprising a flexible sealing unit (2500), wherein the flexible sealing unit (2500) forms confined space with the first housing (2100) and the second housing (2200), and the display system (2400) is in the confined space.

9. The device according to any one of claims 1 to 8, further comprising a rotary structure (2600) that drives the first housing (2100) to rotate.

10. The device according to claim 9, further comprising a holder (2700), wherein the holder (2700) is connected to the rotary structure (2600), and the holder (2700) is configured to support the first housing (2100).

11. A vehicle, comprising a structural device and the virtual image display device (2000) according to any one of claims 1 to 10, wherein the virtual image display device (2000) is located in accommodating space of the structural device.

12. The vehicle according to claim 11, wherein the structural device comprises at least one of the following:
a dashboard console, a backrest, an inner wall of the vehicle, an operation console, and a processing console.

13. The vehicle according to claim 11 or 12, wherein a rotary shaft (2310) of the virtual image display device (2000) is located inside the structural device.

14. The vehicle according to any one of claims 11 to 13, wherein
a folding mechanism (2300) is configured to move a second housing (2200) into or out of the accommodating space.

15. The vehicle according to claim 14, wherein
a rotary structure (2600) is configured to drive a first housing (2100) to rotate, to rotate the folded virtual image display device (2000) into the accommodating space.

16. The vehicle according to claim 14, further comprising a sensing unit, wherein the sensing unit is configured to detect a position of a human eye.
